# DEMANDE DE BREVET EUROPEEN

(11) **EP 2 213 626 A1**
(43) Date de publication de la demande: **04.08.2010**
(21) Numéro de dépôt: 10152281.1
(22) Date de dépôt: 01.02.2010
(51) Int. Cl.: C02F 3/00, C02F 11/00

(54) **Procédé de synthèse d'une eau usée**

(30) Priorité: 02.02.2009 FR 0950640
(71) Demandeur: VEOLIA EAU - COMPAGNIE GENERALE DES EAUX, 75008 Paris (FR); CENTRE NATIONAL DU MACHINISME AGRICOLE DU GENIE RURAL DES EAUX ET DES FORETS (CEMAGREF), 92160 Antony (FR)
(72) Inventeur: Maisonnave, Virginie, 78600, Maisons-Laffitte (FR); Le Pimpec, Paul, 69730, Genay (FR)
(74) Mandataire: Balesta, Pierre

(57) **Abrégé**

L'invention concerne un procédé de synthèse d'une eau usée. L'invention se **caractérise en ce que** le procédé comporte les étapes consistant à :
- fournir une boue provenant d'une installation de traitement d'effluents ; et
- ajouter une composition organique et/ou une composition minérale à la boue.

## Description

La présente invention concerne le domaine du traitement des effluents, et notamment celui de l'assainissement des eaux usées urbaines.

Le traitement des eaux usées urbaines est aujourd'hui réalisé grâce à des installations de traitement ou d'assainissement dont la capacité de traitement est globalement proportionnelle au nombre d'habitants générant ces eaux usées.

De manière connue en soi, une installation d'assainissement pour une grande ville comporte plusieurs organes de traitement tels notamment des décanteurs, digesteurs, filtres et clarificateurs dans lesquels les eaux usées transitent. Ces dernières y sont filtrées et subissent plusieurs traitements biologiques et/ou physico-chimiques de manière à éliminer les composés toxiques et à séparer la matière solide de l'eau.

Une installation d'assainissement destinée à une utilisation domestique, également appelée "filière", comporte également plusieurs dispositifs de traitement, le plus souvent des cuves de traitement ou des petits bassins dans lesquelles se déroulent des réactions biologiques en vue de traiter les effluents.

Pour pouvoir mettre sur le marché un tel dispositif de traitement, ce dernier doit être testé et homologué. Autrement dit, il convient de s'assurer au préalable que le dispositif de traitement présente une capacité suffisante pour assainir les eaux usées générées par un certain nombre d'habitants. Par exemple, une microstation peut être homologuée pour une capacité de 5 équivalents-habitants, un « équivalent-habitant » correspondant de manière réglementaire pour un habitant à une charge organique journalière de 60 grammes.

En Europe, les dispositifs de traitement doivent notamment satisfaire à la norme EN 12566-3 afin d'obtenir le marquage « CE ».

Pour obtenir la marque CE, il est bien évidemment nécessaire de tester la capacité d'assainissement du dispositif de traitement avant son installation sur site.

Pour ce faire, il est connu de réaliser une dérivation du réseau d'eaux usées de manière à amener un flux d'eau usée dans le dispositif de traitement à tester, ce dernier se trouvant alors généralement sur une plateforme de tests reliée à un laboratoire de certification, également appelé "laboratoire notifié". Ensuite, le laboratoire réalise un protocole de test, tel que par exemple celui qui est défini dans la norme précitée, de manière à déterminer si la capacité du dispositif de traitement annoncée par le constructeur du dispositif est conforme aux critères exposés dans la norme. Si tel est le cas, le dispositif de traitement peut recevoir, sur la foi du rapport d'essais du laboratoire notifié, la marque CE par son constructeur.

En d'autres termes, la capacité d'assainissement du dispositif de traitement est actuellement validée à partir d'un flux d'eau usée réelle dans la mesure où elle provient du réseau d'eaux usées dans lequel circulent les effluents urbains.

Cependant, il se trouve que la composition biochimique des eaux usées pour un réseau donné varie dans le temps. Par conséquent, le protocole de test peut donner des résultats différents selon la période choisie pour effectuer ces tests. De plus, la composition biochimique des eaux usées peut varier d'un réseau à l'autre, tant et si bien que deux laboratoires différents testant un même dispositif de traitement peuvent être conduits à tester des produits dans des conditions différentes et par voie de conséquence obtenir des résultats différents qui ne confèrent pas les mêmes garanties de performances.

Une telle variabilité du résultat des tests peut conduire à surestimer ou sous-estimer la capacité d'assainissement d'un dispositif de traitement. Dans les deux cas, le dimensionnement du dispositif ne sera pas adapté au nombre d'habitants de la maison, ce qui peut se révéler problématique notamment si le dispositif n'a pas la capacité suffisante pour traiter la totalité des effluents générés par les habitants.

Un but de l'invention est de remédier aux inconvénients précités.

L'invention atteint son but par le fait que le dispositif de traitement est testé à l'aide d'une eau usée synthétique et non pas réelle.

Un premier objet de l'invention concerne donc un procédé de synthèse d'une telle eau usée, comprenant les étapes consistant à :
- fournir une boue provenant d'une installation de traitement d'effluents ; et
- ajouter une composition organique et/ou une composition minérale à la boue.

La composition organique et/ou la composition minérale sont ajoutées en quantité suffisante pour que l'eau usée synthétisée présente une composition biochimique similaire à celle d'une eau usée réelle. En effet, la boue apporte certes la plupart des composés organiques que l'on trouve dans les eaux usées réelles mais pas forcément en quantité suffisante. Il peut donc être nécessaire d'ajouter un ou plusieurs composés organiques afin d'obtenir in fine une eau usée synthétique dont la composition organique est similaire à celle d'une eau usée réelle utilisable pour effectuer les tests. De plus, la boue peut présenter une minéralité plus faible que celle des eaux usées réelles de sorte qu'il peut être nécessaire d'ajouter des minéraux, comme par exemple mais pas exclusivement de l'azote, du phosphore, du magnésium ou du sodium.

Lorsque la composition de la boue n'est pas déjà connue, il convient de réaliser l'étape consistant à déterminer la composition biochimique de la boue avant de réaliser l'étape d'ajout de compositions.

De plus, il pourra être ajouté de l'eau claire, comme par exemple de l'eau du robinet, afin d'obtenir les dilutions ou concentrations souhaitées.

De préférence, la composition biochimique de l'eau usée synthétique que l'on souhaite obtenir est prédéterminée, en conséquence de quoi on obtient la quantité (ou la concentration) de composition organique et/ou minérale à ajouter à partir de la différence entre les valeurs prédéterminées des paramètres biochimiques de l'eau usée cible et celles des paramètres de la boue.

En outre, l'étape d'ajout précitée, à savoir l'étape consistant à ajouter une composition organique et/ou minérale, est réalisée, de préférence en laboratoire, postérieurement au prélèvement de la boue dans l'installation de traitement.

Par ailleurs, les paramètres utilisés pour qualifier la composition biochimique de l'eau usée, réelle ou synthétique, sont préférentiellement pris, de manière non exclusive, parmi les paramètres suivants: MES (matière en suspension exprimée en mg/L), DCO (Demande chimique en oxygène, exprimée en mgO₂/L, elle indique la quantité totale d'oxygène qui sera consommée par une attaque chimique avec un oxydant puissant), NTK (azote Kjedahl, exprimé en mgN/L, regroupant l'azote présent sous forme organique et minérale), DBO₅ (Demande biochimique en oxygène en 5 jours, exprimée en mg/L, elle indique la quantité d'oxygène consommée par les micro-organismes pour réduire la fraction biodégradable en 5 jours d'incubation à 20°C), et également la concentration en phosphate et autres minéraux.

Les paramètres précités et la manière de les mesurer sont bien connus de l'homme de l'art spécialiste du traitement de l'eau et sont bien définis dans les manuels portant sur ce domaine technique.

Les installations actuelles de traitement d'effluents génèrent différents types de boues à différents stades du procédé d'assainissement si bien qu'il est aisé et peu couteux d'obtenir de la boue constituant la matière première pour synthétiser l'eau usée.

Comme on l'a déjà mentionné ci-dessus, l'installation de traitement comporte généralement un décanteur et un digesteur.

Dans un premier mode de réalisation de l'invention, la boue provient de la sortie d'un décanteur de l'installation et, de manière préférentielle, ce décanteur est un décanteur primaire. Par décanteur primaire, on entend celui des décanteurs qui est situé le plus en amont par rapport au sens de la circulation du flux d'eau usée dans l'installation. La boue générée par le décanteur primaire est donc appelée boue décantée primaire. Cette boue peut être avantageusement stockée après avoir été congelée.

Dans un second mode de réalisation, la boue provient de la sortie d'un digesteur de l'installation.

Les inventeurs ont constaté, que la boue sortant du digesteur présente une stabilité temporelle bien meilleure que celle de la boue sortant du décanteur.

De manière particulièrement avantageuse, le digesteur est un digesteur primaire destiné à recevoir une boue intermédiaire non préalablement digérée et à générer une boue digérée primaire. Par "digesteur primaire" on entend celui des digesteurs qui est situé le plus en amont par rapport au flux d'eau usée circulant dans l'installation.

Les inventeurs ont constaté que la boue digérée primaire présente une stabilité temporelle encore meilleure. De plus, elle présente une meilleure homogénéité et une plus forte minéralité. L'utilisation de boue digérée primaire est donc particulièrement avantageuse pour obtenir une eau usée synthétique destinée à être utilisée dans le cadre de tests de dispositifs de traitement.

De manière préférentielle et quelle que soit la provenance de la boue, au cours de l'étape d'ajout précitée, on ajoute ladite composition organique en quantité suffisante pour que la demande chimique en oxygène (DCO) de l'eau usée synthétisée soit comprise entre 790 et 970 mgO₂/L.

La composition organique comprend préférentiellement de la glycine et/ou du glycérol, ces composés permettant d'augmenter la teneur en DCO.

De préférence, la composition minérale comprend un composé azoté, tel que par exemple mais pas nécessairement le composé NH₄Cl. De préférence, au cours de l'étape d'ajout, on ajoute une quantité de composé azoté suffisante pour que la concentration en Azote Kjedahl (NTK) dans l'eau usée synthétisée soit comprise entre 72 et 88 mgN/L.

De préférence, la composition minérale comprend en outre un composé phosphaté, tel par exemple, mais pas nécessairement, le composé K2HPO₄ ou bien Na₂HPO₄, 12H₂O. De préférence, au cours de l'étape d'ajout, on ajoute une quantité de composé phosphaté suffisante pour que la concentration en phosphate (Pt) dans l'eau usée synthétisée soit comprise entre 8,5 et 11,5 mgP/L.

Par ailleurs, on ajoute si nécessaire une quantité d'eau claire suffisante pour s'assurer que la concentration de matières en suspension (MES) dans l'eau usée synthétisée soit comprise entre 280 et 420 mg/L.

De préférence, l'eau ajoutée est de l'eau du robinet.

Selon une variante, la composition minérale comprend en outre un composé de magnésium, de sodium, de potassium, de calcium, et/ou de chlore.

Selon un mode de mise en oeuvre avantageux, le procédé selon l'invention comprend les étapes consistant à :
- fournir une boue provenant d'une installation de traitement d'effluents ;
- déterminer la composition biochimique de ladite boue ;
- calculer les quantités de composition organique et/ou minérale à ajouter à la boue pour que le mélange obtenu ait une composition biochimique correspondant sensiblement à une composition biochimique prédéterminée ;
- ajouter à la boue les quantités calculées de composition organique et/ou minérale de manière à obtenir une eau usée synthétique dont la composition biochimique correspond sensiblement à la composition biochimique prédéterminée.

La détermination de la composition biochimique de la boue consiste à mesurer notamment les valeurs des paramètres MES, DCO, DBO₅, NTK, et P telles que définis ci-dessus. La méthode de mesure des valeurs de ces paramètres est bien connue de l'homme de l'art et ne sera pas détaillée ici.

Par « correspond sensiblement », on entend que l'écart moyen entre la valeur obtenue et la valeur prédéterminée désirée est égale à l'incertitude sur la mesure analytique donnée par le laboratoire agréé, par exemple, l'incertitude sur la mesure NTK est généralement de l'ordre de 10 %.

L'invention vise également une eau usée synthétique susceptible d'être obtenue par la mise en oeuvre du procédé selon l'invention.

Avantageusement, l'eau usée synthétique conforme à l'invention présente la composition biochimique suivante :
- sa demande chimique en oxygène est comprise entre 790 et 970 mgO₂/L ;
- sa concentration en Azote Kjedahl est comprise entre 72 et 88 mgN/L ; et
- sa concentration en phosphate est comprise entre 8,5 et 11,5 mgP/L.

De préférence, sa concentration en matières en suspension (MES) est comprise entre 280 et 420 mg/L, et, encore de préférence, sa demande biochimique en oxygène en cinq jours (DBO₅) est comprise entre 340 et 460 mg/L.

On comprend donc que le procédé selon l'invention est simple à mettre en oeuvre.

Qui plus est, la présente invention permet avantageusement de produire une eau usée synthétique ayant une composition chimique prédéterminée quelle que soit la composition chimique de la boue de départ. Ce procédé est donc aisément reproductible.

L'invention sera mieux comprise et ses avantages apparaîtront mieux à la lecture de la description détaillée qui suit, d'un mode de réalisation indiqué à titre d'exemple non limitatif. La description se réfère aux figures uniques annexées suivantes :
- la figure **1** schématise une installation de traitement d'effluents d'où est prélevée une quantité de boue ; et
- la figure **2** est un diagramme illustrant un mode de réalisation du procédé de synthèse d'une eau usée selon l'invention.

Avant de décrire le procédé objet de l'invention, il convient tout d'abord de décrire brièvement une installation de traitement **10** connue par ailleurs.

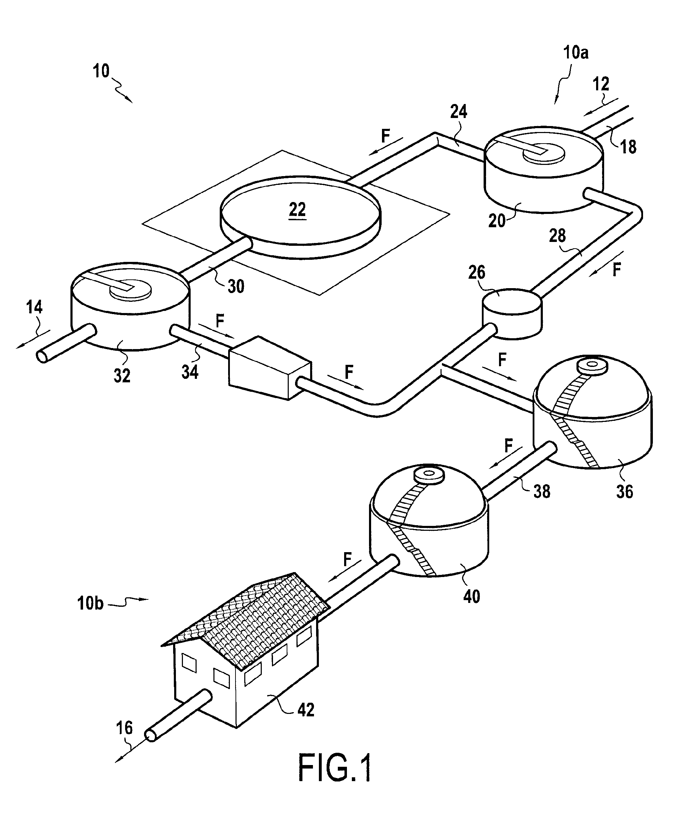

L'installation de traitement **10** d'effluents représentée sur la figure **1** est un exemple connu d'installation destinée à équiper une agglomération de taille moyenne. Classiquement, cette installation a pour fonction de traiter les effluents **12** générés par les habitants de l'agglomération en vue d'en extraire la matière organique sous forme plus ou moins solide. En d'autres termes, à l'issue des opérations de traitement, on obtient des eaux claires **14** d'une part, et des boues sèches, liquides ou pâteuses selon les procédés employés **16** d'autre part.

Pour ce faire, les effluents **12** circulent dans l'installation selon les flèches **F** représentées sur la figure **1****,** depuis l'amont **10a** de l'installation **10,** vers l'aval **10b** de l'installation **12.**

Dans l'exemple illustré ici, qui n'est en aucune manière limitatif au regard de l'objet de la présente invention, une conduite d'entrée **18** amène les effluents **12** depuis l'agglomération vers l'amont **10** a de l'installation de traitement **10.**

Cette conduite d'entrée **18** est reliée à un décanteur primaire **20** dont la fonction est de réaliser une première décantation des effluents **12.** Les particules les plus lourdes tendant à tomber au fond du décanteur **20,** on réalise par ce biais une première séparation entre les corps lourds et les corps liquides. Les corps liquides sont amenés vers un bassin d'aération **22** par une conduite **24,** tandis que les corps lourds, également appelés boues décantées primaires, sont amenés vers un épaississeur **26** par une conduite **28.**

L'eau sortant du bassin d'aération **22** est envoyée, par la conduite **30,** vers un second décanteur **32,** généralement appelé clarificateur, dont la fonction est de réaliser une dernière décantation afin de clarifier l'eau avant sa sortie de l'installation de traitement **10.** On comprend donc que l'eau clarifiée sortant du clarificateur **32** correspond à l'eau claire **14** précitée.

Les corps lourds sortant du second décanteur soit amenés par la conduire **34** vers un digesteur primaire **36.** A l'aide de la figure **1****,** on constate que les boues sortant de l'épaississeur **26** sont également amenées dans le digesteur primaire **36.**

La fonction de ce digesteur primaire **36** est de réaliser une digestion anaérobie des boues intermédiaire y séjournant. Dans le digesteur **36,** les bactéries sont détruites et les odeurs supprimées. Qui plus est, la destruction des bactéries s'accompagne de la création de biogaz constitué principalement de méthane et de dioxyde de carbone.

Les boues sortant de ce digesteur primaire **36** sont appelées boues digérées primaires. Ces dernières sont ensuite envoyées par une conduite **38** vers un digesteur secondaire **40,** disposé en aval du digesteur primaire **36,** afin d'y subir une nouvelle opération de digestion. Enfin les boues sortant de ce digesteur secondaire **40,** appelées boues digérées secondaires, peuvent être amenées dans une station de déshydratation **42** en vue d'y être déshydratées. De là sont générées les boues sèches **16** précitées.

La présente invention vise la synthèse d'une eau usée synthétique destinée à être utilisée pour tester un dispositif de traitement d'effluents, ainsi que l'eau usée synthétique en tant que telle.

Dans cet exemple, la composition biochimique de l'eau usée synthétique que l'on souhaite obtenir est la suivante :
- la demande chimique en oxygène (DCO) est comprise entre 790 et 970 mg02/L ;
- la concentration en Azote Kjedahl (NTK) est comprise entre 72 et 88 mgN/L ;
- la concentration en phosphate (Ptot) est comprise en 8,5 et 11 mgP/L ; et de préférence :
- la concentration en matières en suspension (MES) est comprise entre 280 et 420 mg/L ; et, encore de préférence :
- la demande biochimique en oxygène en cinq jours (DBO₅) est comprise entre 340 et 460 mg/L.

Une telle composition biochimique, proche de celle d'une eau usée réelle, est particulièrement acceptée pour tester les dispositifs de traitement en vue de leur homologation.

Pour obtenir une telle eau usée synthétique, on procède préférentiellement selon un mode de réalisation préféré de l'invention, de la façon suivante :

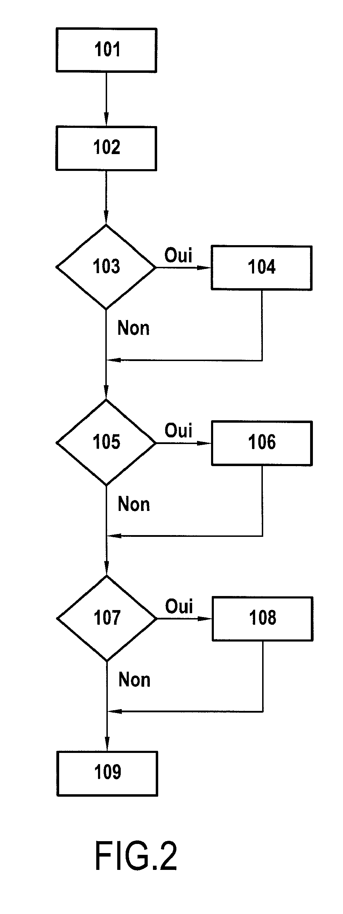

Dans une première étape **101,** illustrée sur la figure **2****,** on collecte de la boue provenant d'une installation de traitement comportant un digesteur, telle que l'installation de traitement **10** décrite ci-dessus en référence à la figure **1****.** Préférentiellement, on prélève de la boue digérée primaire provenant de la sortie du digesteur **36.**

Si nécessaire, cette boue digérée primaire collectée peut être stockée, par exemple en étant congelée. On peut également stocker une grande quantité de boue, à savoir environ 5m³ dans une cuve prévue à cet effet de manière à disposer suffisamment de boue pour réaliser des tests de dispositifs de traitement sur plusieurs semaines.

On fournit ensuite une certaine quantité de cette boue, par exemple 10L, pour reconstituer un certain volume d'eau usée synthétique, par exemple 1m3, qui est une quantité suffisante pour tester un dispositif ou une filière adaptée pour 5 équivalent-habitants, étant précisé que par filière, on entend une ensemble de dispositifs de traitement associés les uns aux autres et destinés à mettre en oeuvre un procédé d'assainissement.

On réalise ensuite un certain nombre d'analyses, au cours d'une étape 102, afin de déterminer la composition biochimique de cette boue.

Les analyses réalisées sur de la boue provenant du digesteur primaire de Saint Thibault les Vignes (France) ont par exemple donné les résultats suivant :

| **MES** | **DCO tot** | **NTK** | **Ptot** |
|---|---|---|---|
| mg/L | mgO₂/L | mgN/L | mgP/L |
| **357** | **415** | **14** | **8** |

Sans sortir du cadre de la présente invention, on peut également réaliser des analyses supplémentaires et en particulier mesurer les paramètres biochimiques suivants : concentration en NO₂, NO₃, NH₄, MVS (matière volatile).

Il faut préciser que dans cet exemple, la boue collectée a été préalablement diluée avec de l'eau claire pour obtenir la valeur MES de 357 mg/L, avant de mesurer les autres paramètres de sorte que la valeur MES obtenue soit dans la plage de valeurs souhaitée.

Conformément à l'invention, on détermine la quantité de composition organique et/ou minérale à ajouter à la boue pour obtenir une eau usée dont la composition biochimique correspond à une composition chimique prédéterminée.

En l'espèce, cette composition biochimique prédéterminée est par exemple :
MES : 350 mg/L ; DCO : 880 mgO₂/L ; NTK : 80 mgN/L ; Ptot : 10 mgP/L.

On comprend donc que cette composition chimique prédéterminée constitue une composition chimique cible que l'on vise pour obtenir une eau usée synthétique dont les valeurs des paramètres biochimiques sont comprises dans les plages avantageuses telles que mentionnées ci-dessus. Sans sortir du cadre de l'invention, on pourrait tout à fait choisir une autre composition biochimique prédéterminée dès lors que l'on obtient in fine une eau usée dont les valeurs des paramètres biochimiques sont comprises dans les plages de valeurs précitées.

Au cours de l'étape **103** on détermine s'il est nécessaire d'ajouter une composition organique et, le cas échéant, en quelle quantité. C'est le cas en l'espèce.

On détermine ici que la quantité de composition organique qu'il est nécessaire d'ajouter pour que la valeur de la DCO soit égale à 880 mgO₂/L est, en concentration, de 880 - 415 = 465mgO₂/L.

Comme composition organique, on utilise dans cet exemple un mélange de glycine et de glycérol.

Les inventeurs ont déterminé que pour obtenir 1 mg de DCO, il faut ajouter environ 1,56 mg de glycine ou bien 0,82 mg de glycérol.

Dans l'exemple, 30% de la DCO manquante est apportée par la glycine tandis que 70% de la DCO manquante est apportée par le glycérol.

On en déduit que, en l'espèce, il convient d'apporter 218mg/L de glycine et 267 mg/L de glycérol. Cela est réalisé au cours de l'étape **104.**

Les étapes **103, 105, 107** et **109,** détaillées ci-dessous, consistent à déterminer s'il est nécessaire d'ajouter une composition minérale et, le cas échéant, en quelle quantité.

Ici, la composition minérale comporte un composé azoté, un composé phosphaté et un composé de magnésium.

Au cours de l'étape **105,** on détermine s'il est nécessaire d'ajouter un composé azoté et, le cas échéant, en quelle quantité. Il convient effectivement d'ajouter un composé azoté. Pour obtenir 80 mgN/L d'azote NTK, il faut ajouter 26mg/L d'azote NTK, car la glycine apporte aussi une quantité de NTK, à savoir : quantité de glycine ajoutée *(Masse atomique de l'azote/Masse moléculaire de la glycine) = 218*(14/75) : 40 mgN/L.

Pour procéder à l'ajout de 26mg/l d'azote NTK, on ajoute donc au cours d'une étape **106,** un composé azoté en quantité suffisante, en l'espèce 99 mg/L de NH₄Cl.

Au cours de l'étape **107,** on détermine s'il est nécessaire d'ajouter un composé phosphaté et, le cas échéant, en quelle quantité : on détermine que pour obtenir 10 mgP/L de phosphate, il convient ici d'ajouter 2mg/L. Pour ce faire, on ajoute 3mg/L de K₂HPO₄ et 21 mg/L de Na₂HPO₄, 12H₂O, au cours d'une étape d'ajout **108.**

On comprend bien que les étapes **103,105** et **107,** ainsi que leurs étapes d'ajout associées **104, 106** et **108** peuvent être réalisées dans un ordre différent.

Au cours d'une étape **109,** facultative, on ajoute 40mg/L d'un composé de magnésium, à savoir MgSO₄,7H₂O afin que la composition biochimique de l'eau usée synthétisée soit encore plus proche de celle d'une eau usée réelle.

A l'issue de ces ajouts, les inventeurs ont procédé à de nouvelles analyses des paramètres biochimiques et ont obtenu les résultats suivants :

| **MES** | **DCO tot** | **DCO sol** | **NTK** | **NH₄** | **NO₂** | **NO₃** |
|---|---|---|---|---|---|---|
| mg/l | mgO₂/l | mgO₂/l | mgN/l | mgN/l | mgN/l | mgN/l |
| **357** | **808** | **445** | **72** | **38** | **0.05** | **0.3** |
| | | | | | | |

| **Ptot** | **Mg** | **Ca** | **Na** | **K** | **Cl** | **SO₄** |
|---|---|---|---|---|---|---|
| mgP/l | mg/l | mg/l | mg/l | mg/l | mg/l | mg/l |
| **12** | **12** | **37** | **23** | **13** | **90** | **37** |

On constate donc que les valeurs obtenues sont très proches de celles de la composition biochimique prédéterminée, et en tout état de cause, comprises dans les plages de valeurs avantageuses précitées.

En d'autres termes, grâce au procédé selon l'invention, il a été possible d'obtenir eau usée synthétique dont la composition biochimique est proche de celle d'une eau usée réelle. De plus, ce procédé de synthèse est simple à mettre en oeuvre tout en étant reproductible.

## Revendications

1. Procédé de synthèse d'une eau usée **caractérisé en ce qu'**il comprend les étapes consistant à :
- fournir une boue provenant d'une installation de traitement (10) d'effluents ; et
- ajouter une composition organique et une composition minérale à la boue, procédé dans lequel on ajoute une quantité de ladite composition organique suffisante pour que la demande chimique en oxygène de l'eau usée synthétisée soit comprise entre 790 et 970 mgO₂/L, dans lequel on ajoute une quantité de composé azoté suffisante pour que la concentration en Azote Kjedahl dans l'eau usée synthétisée soit comprise entre 72 et 88 mgN/L, dans lequel on ajoute une quantité de composé phosphaté suffisante pour que la concentration en phosphate dans l'eau usée synthétisée soit comprise entre 8,5 et 11,5 mgP/L, et dans lequel on ajoute une quantité d'eau suffisante pour que la concentration de matières en suspension dans l'eau usée synthétisée soit comprise entre 280 et 420 mg/L.

2. Procédé de synthèse selon la revendication **1,** dans lequel la boue provient de la sortie d'un décanteur (20, 32) de l'installation.

3. Procédé de synthèse selon la revendication **2,** dans lequel le décanteur (20, 32) est un décanteur primaire (20).

4. Procédé de synthèse selon la revendication **1,** dans lequel la boue provient de la sortie d'un digesteur (36, 40) de l'installation.

5. Procédé de synthèse selon la revendication **4,** dans lequel le digesteur est un digesteur primaire (36) destiné à recevoir une boue intermédiaire non préalablement digérée et à générer une boue digérée primaire.

6. Procédé de synthèse selon l'une quelconque des revendications **1** à **5,** dans lequel la composition organique comprend de la glycine et/ou du glycérol.

7. Procédé de synthèse selon l'une quelconque des revendications **1** à **6,** dans lequel la composition minérale comprend un composé de magnésium, de sodium, de potassium, de calcium, et/ou de chlore.

8. Procédé de synthèse d'une eau usée selon l'une quelconque des revendications **1** à **7, caractérisé en ce qu'**il comprend les étapes consistant à :
- fournir une boue provenant d'une installation de traitement d'effluents ;
- déterminer la composition biochimique de ladite boue ;
- calculer les quantités de composition organique et/ou minérale à ajouter à la boue pour que le mélange obtenu ait une composition biochimique correspondant sensiblement à une composition biochimique prédéterminée ;
- ajouter à la boue les quantités calculées de composition organique et/ou minérale de manière à obtenir une eau usée synthétique dont la composition biochimique correspond sensiblement à la composition biochimique prédéterminée.

9. Eau usée synthétique susceptible d'être obtenue par la mise en oeuvre du procédé de synthèse selon l'une quelconque des revendications **1** à **8.**

10. Eau usée synthétique selon la revendication **9, caractérisée en ce que** :
- sa demande chimique en oxygène est comprise entre 790 et 970 mgO₂/L ;
- sa concentration en Azote Kjedahl est comprise entre 72 et 88 mgN/L ; et
- sa concentration en phosphate est comprise entre 8,5 et 11,5 mgP/L.

11. Eau usée synthétique selon la revendication **10, caractérisée en ce que** :
- sa concentration en matières en suspension est comprise entre 280 et 420 mg/L.

12. Eau usée synthétique selon la revendication **9** ou **10, caractérisée en ce que** :
- sa demande biochimique en oxygène en cinq jours est comprise entre 340 et 460 mg/L.

13. Utilisation d'une eau usée synthétique selon l'une quelconque des revendications **9** à **12** pour tester la capacité d'un dispositif de traitement d'effluents.
